# EUROPEAN PATENT SPECIFICATION

(11) **EP 3 152 662 B1**
(45) Date of publication and mention of the grant of the patent: **24.04.2019**
(21) Application number: 15802652.6
(22) Date of filing: 04.06.2015
(51) Int. Cl.: G06F 11/07, G06F 3/06, G06F 11/14, G06F 11/20, G06F 11/10

(54) **MECHANISM FOR PERSISTING MESSAGES IN A STORAGE SYSTEM**
MECHANISMUS ZUM PERSISTIEREN VON NACHRICHTEN IN EINEM SPEICHERSYSTEM
MÉCANISME S'APPLIQUANT À LA PERSISTANCE DE MESSAGES DANS UN SYSTÈME DE STOCKAGE

(30) Priority: 04.06.2014 US 201414296146; 04.06.2014 US 201414296164
(43) Date of publication of application: 12.04.2017
(73) Proprietor: Pure Storage, Inc., Mountain View, California 94041 (US)
(72) Inventor: HAYES, John, Mountain View, California 94041 (US); COLGROVE, John, Mountain View, California 94041 (US); LEE, Robert, Mountain View, California 94041 (US); ROBINSON, Joshua, Mountain View, California 94041 (US); SEARS, Rusty, Mountain View, California 94041 (US); OSTROVSKY, Igor, Mountain View, California 94041 (US); GUPTA, Shantanu, Mountain View, California 94041 (US); DAVIS, John D, Mountain View, California 94041 (US); GOLD, Brian, Mountain View, California 94041 (US)
(74) Representative: FRKelly
(86) International application number: PCT/US2015/034296
(87) International publication number: WO 2015/188008

(56) References cited:
- US-A1- 2010 037 056
- US-A1- 2011 040 925
- US-A1- 2011 040 925
- US-A1- 2012 011 398
- US-A1- 2012 011 398
- US-A1- 2013 339 818
- US-B1- 8 700 875
- US-B2- 8 522 073
- US-B2- 8 595 455

## Description

### BACKGROUND

Solid-state memory, such as flash, is currently in use in solid-state drives (SSD) to augment or replace conventional hard disk drives (HDD), writable CD (compact disk) or writable DVD (digital versatile disk) drives, collectively known as spinning media, and tape drives, for storage of large amounts of data. Flash and other solid-state memories have characteristics that differ from spinning media. Yet, many solid-state drives are designed to conform to hard disk drive standards for compatibility reasons, which makes it difficult to provide enhanced features or take advantage of unique aspects of flash and other solid-state.

The document US2012/0011398A discloses a failure recovery using consensus replication in a distributed flash memory system. The document US2011/0040925A discloses a storage system for enhanced protection of data stored in a flash memory system using a page striping storage scheme. The document US2010/0037056A discloses a storage infrastructure for archiving data among a client, a broker and a plurality of archives, wherein the client comprises a backup agent configured to fragment and erasure encode the data to create a set of erasure encoded data fragments. The document US2013/0339818A discloses redundant storage of data in a multi-node storage cluster based on erasure encoding of data.

It is within this context that the embodiments arise.

### SUMMARY

In some embodiments, a plurality of storage nodes in a single chassis is provided. The plurality of storage nodes in the single chassis is configured to communicate together as a storage cluster. Each of the plurality of storage nodes includes nonvolatile solid-state memory for user data storage. The plurality of storage nodes is configured to distribute the user data and metadata associated with the user data throughout the plurality of storage nodes such that the plurality of storage nodes maintain the ability to read the user data, using erasure coding, despite a loss of two of the plurality of storage nodes. The plurality of storage nodes are configured to initiate an action based on the redundant copies of the metadata, responsive to achieving a level of redundancy for the redundant copies of the metadata. The single chassis includes power distribution, a high speed communication bus and the ability to install one or more storage nodes which may use the power distribution and communication bus. A method for accessing user data in a plurality of storage nodes having nonvolatile solid-state memory is also provided.

Other aspects and advantages of the embodiments will become apparent from the following detailed description taken in conjunction with the accompanying drawings which illustrate, by way of example, the principles of the described. The invention being defined in detail in the appended independent claims 1 and 10.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.
Fig. 1 is a perspective view of a storage cluster with multiple storage nodes and internal storage coupled to each storage node to provide network attached storage, in accordance with some embodiments.
Fig. 2 is a system diagram of an enterprise computing system, which can use one or more of the storage clusters of Fig. 1 as a storage resource in some embodiments.
Fig. 3 is a block diagram showing multiple storage nodes and non-volatile solid state storage with differing capacities, suitable for use in the storage cluster of Fig. 1 in accordance with some embodiments.
Fig. 4 is a block diagram showing an interconnect switch coupling multiple storage nodes in accordance with some embodiments.
Fig. 5 is a multiple level block diagram, showing contents of a storage node and contents of one of the non-volatile solid state storages in accordance with some embodiments.
Fig. 6A is a flow diagram for a method of operating a storage cluster in some embodiments.
Fig. 6B is a flow diagram for a method of rebuilding data in a storage cluster.
Fig. 7 is a block diagram showing a communication path for redundant copies of metadata, with further details of storage nodes and solid-state storages in accordance with some embodiments.
Fig. 8 is a flow diagram of a method for persisting messages in a storage system, which can be practiced on or by embodiments of storage clusters, storage nodes and/or non-volatile solid state storages in accordance with some embodiments.
Fig. 9 is an illustration showing an exemplary computing device which may implement the embodiments described herein.

### DETAILED DESCRIPTION

The embodiments below describe a storage cluster that stores user data, such as user data originating from one or more user or client systems or other sources external to the storage cluster. The storage cluster distributes user data across storage nodes housed within a chassis, using erasure coding and redundant copies of metadata. Erasure coding refers to a method of data protection or reconstruction in which data is stored across a set of different locations, such as disks, storage nodes or geographic locations. Flash memory is one type of solid-state memory that may be integrated with the embodiments, although the embodiments may be extended to other types of solid-state memory or other storage medium, including non-solid state memory. Control of storage locations and workloads are distributed across the storage locations in a clustered peer-to-peer system. Tasks such as mediating communications between the various storage nodes, detecting when a storage node has become unavailable, and balancing I/Os (inputs and outputs) across the various storage nodes, are all handled on a distributed basis. Data is laid out or distributed across multiple storage nodes in data fragments or stripes that support data recovery in some embodiments. Ownership of data can be reassigned within a cluster, independent of input and output patterns. This architecture described in more detail below allows a storage node in the cluster to fail, with the system remaining operational, since the data can be reconstructed from other storage nodes and thus remain available for input and output operations. In various embodiments, a storage node may be referred to as a cluster node, a blade, or a server.

The storage cluster is contained within a chassis, i.e., an enclosure housing one or more storage nodes. A mechanism to provide power to each storage node, such as a power distribution bus, and a communication mechanism, such as a communication bus that enables communication between the storage nodes are included within the chassis. The storage cluster can run as an independent system in one location according to some embodiments. In one embodiment, a chassis contains at least two instances of both the power distribution and the communication bus which may be enabled or disabled independently. The internal communication bus may be an Ethernet bus, however, other technologies such as Peripheral Component Interconnect (PCI) Express, InfiniBand, and others, are equally suitable. The chassis provides a port for an external communication bus for enabling communication between multiple chassis, directly or through a switch, and with client systems. The external communication may use a technology such as Ethernet, InfiniBand, Fibre Channel, etc. In some embodiments, the external communication bus uses different communication bus technologies for inter-chassis and client communication. If a switch is deployed within or between chassis, the switch may act as a translation between multiple protocols or technologies. When multiple chassis are connected to define a storage cluster, the storage cluster may be accessed by a client using either proprietary interfaces or standard interfaces such as network file system (NFS), common internet file system (CIFS), small computer system interface (SCSI) or hypertext transfer protocol (HTTP). Translation from the client protocol may occur at the switch, chassis external communication bus or within each storage node.

Each storage node may be one or more storage servers and each storage server is connected to one or more non-volatile solid state memory units, which may be referred to as storage units. One embodiment includes a single storage server in each storage node and between one to eight non-volatile solid state memory units, however this one example is not meant to be limiting. The storage server may include a processor, dynamic random access memory (DRAM) and interfaces for the internal communication bus and power distribution for each of the power buses. Inside the storage node, the interfaces and storage unit share a communication bus, e.g., PCI Express, in some embodiments. The non-volatile solid state memory units may directly access the internal communication bus interface through a storage node communication bus, or request the storage node to access the bus interface. The non-volatile solid state memory unit contains an embedded central processing unit (CPU), solid state storage controller, and a quantity of solid state mass storage, e.g., between 2-32 terabytes (TB) in some embodiments. An embedded volatile storage medium, such as DRAM, and an energy reserve apparatus are included in the non-volatile solid state memory unit. In some embodiments, the energy reserve apparatus is a capacitor, super-capacitor, or battery that enables transferring a subset of DRAM contents to a stable storage medium in the case of power loss. In some embodiments, the non-volatile solid state memory unit is constructed with a storage class memory, such as phase change or magnetoresistive random access memory (MRAM) that substitutes for DRAM and enables a reduced power hold-up apparatus.

One of many features of the storage nodes and non-volatile solid state storage is the ability to proactively rebuild data in a storage cluster. The storage nodes and non-volatile solid state storage can determine when a storage node or non-volatile solid state storage in the storage cluster is unreachable, independent of whether there is an attempt to read data involving that storage node or non-volatile solid state storage. The storage nodes and non-volatile solid state storage then cooperate to recover and rebuild the data in at least partially new locations. This constitutes a proactive rebuild, in that the system rebuilds data without waiting until the data is needed for a read access initiated from a client system employing the storage cluster. These and further details of the storage memory and operation thereof are discussed below.

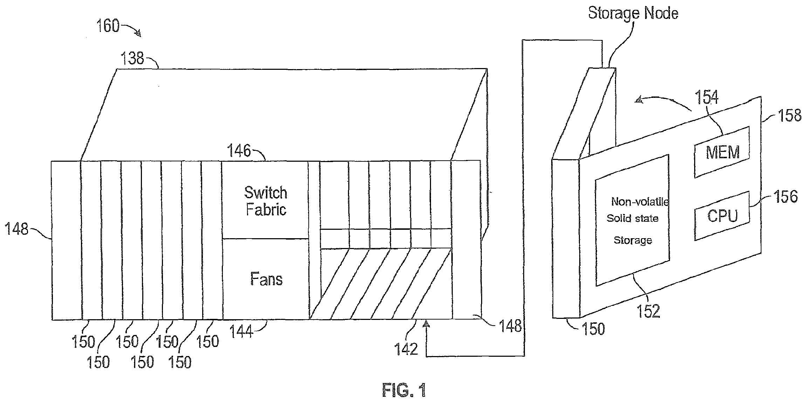

Fig. 1 is a perspective view of a storage cluster 160, with multiple storage nodes 150 and internal solid-state memory coupled to each storage node to provide network attached storage or storage area network, in accordance with some embodiments. A network attached storage, storage area network, or a storage cluster, or other storage memory, could include one or more storage clusters 160, each having one or more storage nodes 150, in a flexible and reconfigurable arrangement of both the physical components and the amount of storage memory provided thereby. The storage cluster 160 is designed to fit in a rack, and one or more racks can be set up and populated as desired for the storage memory. The storage cluster 160 has a chassis 138 having multiple slots 142. It should be appreciated that chassis 138 may be referred to as a housing, enclosure, or rack unit. In one embodiment, the chassis 138 has fourteen slots 142, although other numbers of slots are readily devised. For example, some embodiments have four slots, eight slots, sixteen slots, thirty-two slots, or other suitable number of slots. Each slot 142 can accommodate one storage node 150 in some embodiments. Chassis 138 includes flaps 148 that can be utilized to mount the chassis 138 on a rack. Fans 144 provide air circulation for cooling of the storage nodes 150 and components thereof, although other cooling components could be used, or an embodiment could be devised without cooling components. A switch fabric 146 couples storage nodes 150 within chassis 138 together and to a network for communication to the memory. In an embodiment depicted in Fig. 1, the slots 142 to the left of the switch fabric 146 and fans 144 are shown occupied by storage nodes 150, while the slots 142 to the right of the switch fabric 146 and fans 144 are empty and available for insertion of storage node 150 for illustrative purposes. This configuration is one example, and one or more storage nodes 150 could occupy the slots 142 in various further arrangements. The storage node arrangements need not be sequential or adjacent in some embodiments. Storage nodes 150 are hot pluggable, meaning that a storage node 150 can be inserted into a slot 142 in the chassis 138, or removed from a slot 142, without stopping or powering down the system. Upon insertion or removal of storage node 150 from slot 142, the system automatically reconfigures in order to recognize and adapt to the change. Reconfiguration, in some embodiments, includes restoring redundancy and/or rebalancing data or load.

Each storage node 150 can have multiple components. In the embodiment shown here, the storage node 150 includes a printed circuit board 158 populated by a CPU 156, i.e., processor, a memory 154 coupled to the CPU 156, and a non-volatile solid state storage 152 coupled to the CPU 156, although other mountings and/or components could be used in further embodiments. The memory 154 has instructions which are executed by the CPU 156 and/or data operated on by the CPU 156. As further explained below, the non-volatile solid state storage 152 includes flash or, in further embodiments, other types of solid-state memory.

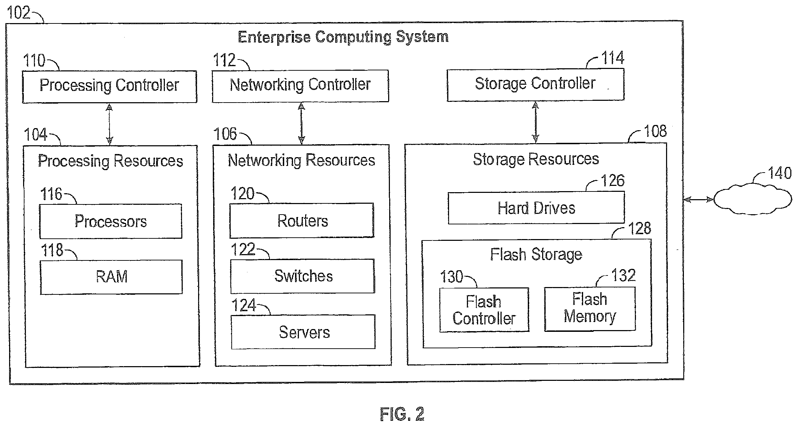

Fig. 2 is a system diagram of an enterprise computing system 102, which can use one or more of the storage nodes, storage clusters and/or non-volatile solid state storage of Fig. 1 as a storage resource 108. For example, flash storage 128 of Fig. 2 may integrate the storage nodes, storage clusters and/or non-volatile solid state storage of Fig. 1 in some embodiments. The enterprise computing system 102 has processing resources 104, networking resources 106 and storage resources 108, including flash storage 128. A flash controller 130 and flash memory 132 are included in the flash storage 128. In various embodiments, the flash storage 128 could include one or more storage nodes or storage clusters, with the flash controller 130 including the CPUs, and the flash memory 132 including the non-volatile solid state storage of the storage nodes. In some embodiments flash memory 132 may include different types of flash memory or the same type of flash memory. The enterprise computing system 102 illustrates an environment suitable for deployment of the flash storage 128, although the flash storage 128 could be used in other computing systems or devices, larger or smaller, or in variations of the enterprise computing system 102, with fewer or additional resources. The enterprise computing system 102 can be coupled to a network 140, such as the Internet, in order to provide or make use of services. For example, the enterprise computing system 102 could provide cloud services, physical computing resources, or virtual computing services.

In the enterprise computing system 102, various resources are arranged and managed by various controllers. A processing controller 110 manages the processing resources 104, which include processors 116 and random-access memory (RAM) 118. Networking controller 112 manages the networking resources 106, which include routers 120, switches 122, and servers 124. A storage controller 114 manages storage resources 108, which include hard drives 126 and flash storage 128. Other types of processing resources, networking resources, and storage resources could be included with the embodiments. In some embodiments, the flash storage 128 completely replaces the hard drives 126. The enterprise computing system 102 can provide or allocate the various resources as physical computing resources, or in variations, as virtual computing resources supported by physical computing resources. For example, the various resources could be implemented using one or more servers executing software. Files or data objects, or other forms of data, are stored in the storage resources 108.

In various embodiments, an enterprise computing system 102 could include multiple racks populated by storage clusters, and these could be located in a single physical location such as in a cluster or a server farm. In other embodiments the multiple racks could be located at multiple physical locations such as in various cities, states or countries, connected by a network. Each of the racks, each of the storage clusters, each of the storage nodes, and each of the non-volatile solid state storage could be individually configured with a respective amount of storage space, which is then reconfigurable independently of the others. Storage capacity can thus be flexibly added, upgraded, subtracted, recovered and/or reconfigured at each of the non-volatile solid state storages. As mentioned previously, each storage node could implement one or more servers in some embodiments.

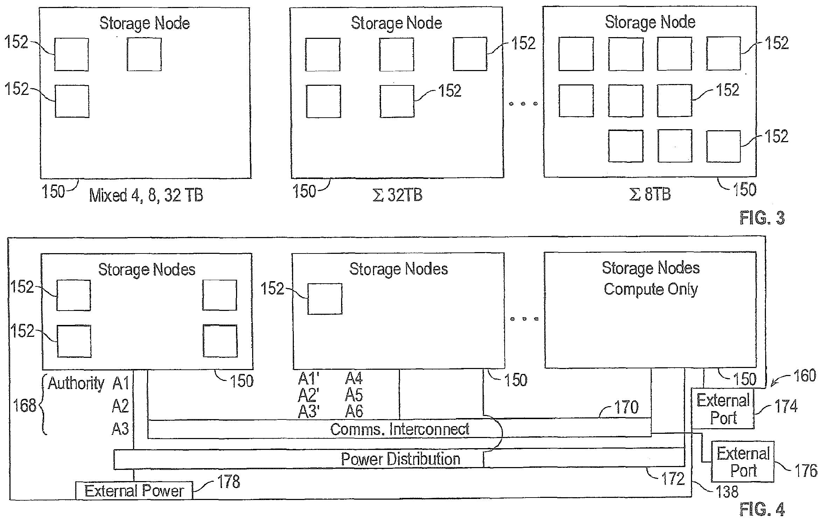

Fig. 3 is a block diagram showing multiple storage nodes 150 and non-volatile solid state storage 152 with differing capacities, suitable for use in the chassis of Fig. 1. Each storage node 150 can have one or more units of non-volatile solid state storage 152. Each non-volatile solid state storage 152 may include differing capacity from other non-volatile solid state storage 152 on a storage node 150 or in other storage nodes 150 in some embodiments. Alternatively, all of the non-volatile solid state storages 152 on a storage node or on multiple storage nodes can have the same capacity or combinations of the same and/or differing capacities. This flexibility is illustrated in Fig. 3, which shows an example of one storage node 150 having mixed non-volatile solid state storage 152 of four, eight and thirty-two TB capacity, another storage node 150 having non-volatile solid state storage 152 each of thirty-two TB capacity, and still another storage node having non-volatile solid state storage 152 each of eight TB capacity. Various further combinations and capacities are readily devised in accordance with the teachings herein. In the context of clustering, e.g., clustering storage to form a storage cluster, a storage node can be or include a non-volatile solid state storage 152. Non-volatile solid state storage 152 is a convenient clustering point as the non-volatile solid state storage 152 may include a nonvolatile random access memory (NVRAM) component, as will be further described below.

Referring to Figs.1 and 3, storage cluster 160 is scalable, meaning that storage capacity with non-uniform storage sizes is readily added, as described above. One or more storage nodes 150 can be plugged into or removed from each chassis and the storage cluster self-configures in some embodiments. Plug-in storage nodes 150, whether installed in a chassis as delivered or later added, can have different sizes. For example, in one embodiment a storage node 150 can have any multiple of 4 TB, e.g., 8 TB, 12 TB, 16 TB, 32 TB, etc. In further embodiments, a storage node 150 could have any multiple of other storage amounts or capacities. Storage capacity of each storage node 150 is broadcast, and influences decisions of how to stripe the data. For maximum storage efficiency, an embodiment can self-configure as wide as possible in the stripe, subject to a predetermined requirement of continued operation with loss of up to one, or up to two, non-volatile solid state storage units 152 or storage nodes 150 within the chassis.

Fig. 4 is a block diagram showing a communications interconnect 170 and power distribution bus 172 coupling multiple storage nodes 150. Referring back to Fig. 1, the communications interconnect 170 can be included in or implemented with the switch fabric 146 in some embodiments. Where multiple storage clusters 160 occupy a rack, the communications interconnect 170 can be included in or implemented with a top of rack switch, in some embodiments. As illustrated in Fig. 4, storage cluster 160 is enclosed within a single chassis 138. External port 176 is coupled to storage nodes 150 through communications interconnect 170, while external port 174 is coupled directly to a storage node. External power port 178 is coupled to power distribution bus 172. Storage nodes 150 may include varying amounts and differing capacities of non-volatile solid state storage 152 as described with reference to Fig. 3. In addition, one or more storage nodes 150 may be a compute only storage node as illustrated in Fig. 4. Authorities 168 are implemented on the non-volatile solid state storages 152, for example as lists or other data structures stored in memory. In some embodiments the authorities are stored within the non-volatile solid state storage 152 and supported by software executing on a controller or other processor of the non-volatile solid state storage 152. In a further embodiment, authorities 168 are implemented on the storage nodes 150, for example as lists or other data structures stored in the memory 154 and supported by software executing on the CPU 156 of the storage node 150. Authorities 168 control how and where data is stored in the non-volatile solid state storages 152 in some embodiments. This control assists in determining which type of erasure coding scheme is applied to the data, and which storage nodes 150 have which portions of the data. Each authority 168 may be assigned to a non-volatile solid state storage 152. Each authority may control a range of inode numbers, segment numbers, or other data identifiers which are assigned to data by a file system, by the storage nodes 150, or by the non-volatile solid state storage 152, in various embodiments.

Every piece of data, and every piece of metadata, has redundancy in the system in some embodiments. In addition, every piece of data and every piece of metadata has an owner, which may be referred to as an authority. If that authority is unreachable, for example through failure of a storage node, there is a plan of succession for how to find that data or that metadata. In various embodiments, there are redundant copies of authorities 168. Authorities 168 have a relationship to storage nodes 150 and non-volatile solid state storage 152 in some embodiments. Each authority 168, covering a range of data segment numbers or other identifiers of the data, may be assigned to a specific non-volatile solid state storage 152. In some embodiments the authorities 168 for all of such ranges are distributed over the non-volatile solid state storages 152 of a storage cluster. Each storage node 150 has a network port that provides access to the non-volatile solid state storage(s) 152 of that storage node 150. Data can be stored in a segment, which is associated with a segment number and that segment number is an indirection for a configuration of a RAID (redundant array of independent disks) stripe in some embodiments. The assignment and use of the authorities 168 thus establishes an indirection to data. Indirection may be referred to as the ability to reference data indirectly, in this case via an authority 168, in accordance with some embodiments. A segment identifies a set of non-volatile solid state storage 152 and a local identifier into the set of non-volatile solid state storage 152 that may contain data. In some embodiments, the local identifier is an offset into the device and may be reused sequentially by multiple segments. In other embodiments the local identifier is unique for a specific segment and never reused. The offsets in the non-volatile solid state storage 152 are applied to locating data for writing to or reading from the non-volatile solid state storage 152 (in the form of a RAID stripe). Data is striped across multiple units of non-volatile solid state storage 152, which may include or be different from the non-volatile solid state storage 152 having the authority 168 for a particular data segment.

If there is a change in where a particular segment of data is located, e.g., during a data move or a data reconstruction, the authority 168 for that data segment should be consulted, at that non-volatile solid state storage 152 or storage node 150 having that authority 168. In order to locate a particular piece of data, embodiments calculate a hash value for a data segment or apply an inode number or a data segment number. The output of this operation points to a non-volatile solid state storage 152 having the authority 168 for that particular piece of data. In some embodiments there are two stages to this operation. The first stage maps an entity identifier (ID), e.g., a segment number, inode number, or directory number to an authority identifier. This mapping may include a calculation such as a hash or a bit mask. The second stage is mapping the authority identifier to a particular non-volatile solid state storage 152, which may be done through an explicit mapping. The operation is repeatable, so that when the calculation is performed, the result of the calculation repeatably and reliably points to a particular non-volatile solid state storage 152 having that authority 168. The operation may include the set of reachable storage nodes as input. If the set of reachable non-volatile solid state storage units changes the optimal set changes. In some embodiments, the persisted value is the current assignment (which is always true) and the calculated value is the target assignment the cluster will attempt to reconfigure towards. This calculation may be used to determine the optimal non-volatile solid state storage 152 for an authority in the presence of a set of non-volatile solid state storage 152 that are reachable and constitute the same cluster. The calculation also determines an ordered set of peer non-volatile solid state storage 152 that will also record the authority to non-volatile solid state storage mapping so that the authority may be determined even if the assigned non-volatile solid state storage is unreachable. A duplicate or substitute authority 168 may be consulted if a specific authority 168 is unavailable in some embodiments.

With reference to Figs. 1-4, two of the many tasks of the CPU 156 on a storage node 150 are to break up write data, and reassemble read data. When the system has determined that data is to be written, the authority 168 for that data is located as above. When the segment ID for data is already determined the request to write is forwarded to the non-volatile solid state storage 152 currently determined to be the host of the authority 168 determined from the segment. The host CPU 156 of the storage node 150, on which the non-volatile solid state storage 152 and corresponding authority 168 reside, then breaks up or shards the data and transmits the data out to various non-volatile solid state storage 152. The transmitted data is written as a data stripe in accordance with an erasure coding scheme. In some embodiments, data is requested to be pulled, and in other embodiments, data is pushed. In reverse, when data is read, the authority 168 for the segment ID containing the data is located as described above. The host CPU 156 of the storage node 150 on which the non-volatile solid state storage 152 and corresponding authority 168 reside requests the data from the non-volatile solid state storage and corresponding storage nodes pointed to by the authority. In some embodiments the data is read from flash storage as a data stripe. The host CPU 156 of storage node 150 then reassembles the read data, correcting any errors (if present) according to the appropriate erasure coding scheme, and forwards the reassembled data to the network. In further embodiments, some or all of these tasks can be handled in the non-volatile solid state storage 152. In some embodiments, the segment host requests the data be sent to storage node 150 by requesting pages from storage and then sending the data to the storage node making the original request.

In some systems, for example in UNIX-style file systems, data is handled with an index node or inode, which specifies a data structure that represents an object in a file system. The object could be a file or a directory, for example. Metadata may accompany the object, as attributes such as permission data and a creation timestamp, among other attributes. A segment number could be assigned to all or a portion of such an object in a file system. In other systems, data segments are handled with a segment number assigned elsewhere. For purposes of discussion, the unit of distribution is an entity, and an entity can be a file, a directory or a segment. That is, entities are units of data or metadata stored by a storage system. Entities are grouped into sets called authorities. Each authority has an authority owner, which is a storage node that has the exclusive right to update the entities in the authority. In other words, a storage node contains the authority, and that the authority, in turn, contains entities.

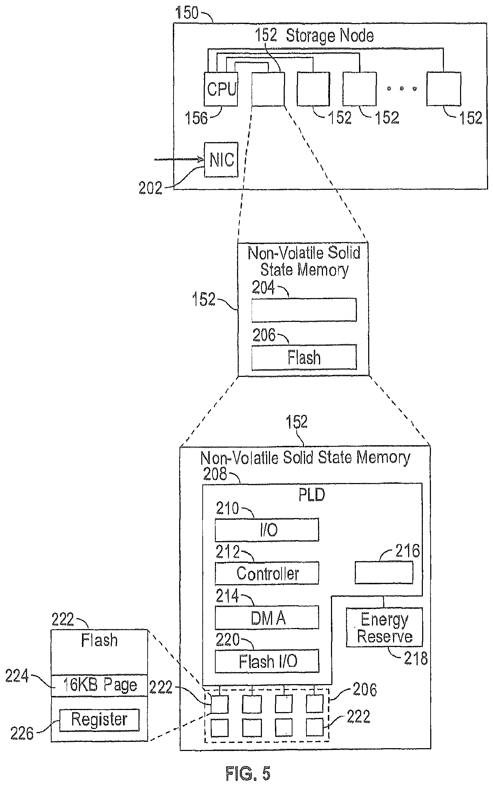

A segment is a logical container of data in accordance with some embodiments. A segment is an address space between medium address space and physical flash locations, i.e., the data segment number, are in this address space. Segments may also contain metadata, which enable data redundancy to be restored (rewritten to different flash locations or devices) without the involvement of higher level software. In one embodiment, an internal format of a segment contains client data and medium mappings to determine the position of that data. Each data segment is protected, e.g., from memory and other failures, by breaking the segment into a number of data and parity shards, where applicable. The data and parity shards are distributed, i.e., striped, across non-volatile solid state storage 152 coupled to the host CPUs 156 (See Fig. 5) in accordance with an erasure coding scheme. Usage of the term segments refers to the container and its place in the address space of segments in some embodiments. Usage of the term stripe refers to the same set of shards as a segment and includes how the shards are distributed along with redundancy or parity information in accordance with some embodiments.

A series of address-space transformations takes place across an entire storage system. At the top is the directory entries (file names) which link to an inode. Inodes point into medium address space, where data is logically stored. Medium addresses may be mapped through a series of indirect mediums to spread the load of large files, or implement data services like deduplication or snapshots. Medium addresses may be mapped through a series of indirect mediums to spread the load of large files, or implement data services like deduplication or snapshots. Segment addresses are then translated into physical flash locations. Physical flash locations have an address range bounded by the amount of flash in the system in accordance with some embodiments. Medium addresses and segment addresses are logical containers, and in some embodiments use a 128 bit or larger identifier so as to be practically infinite, with a likelihood of reuse calculated as longer than the expected life of the system. Addresses from logical containers are allocated in a hierarchical fashion in some embodiments. Initially, each non-volatile solid state storage 152 may be assigned a range of address space. Within this assigned range, the non-volatile solid state storage 152 is able to allocate addresses without synchronization with other non-volatile solid state storage 152.

Data and metadata is stored by a set of underlying storage layouts that are optimized for varying workload patterns and storage devices. These layouts incorporate multiple redundancy schemes, compression formats and index algorithms. Some of these layouts store information about authorities and authority masters, while others store file metadata and file data. The redundancy schemes include error correction codes that tolerate corrupted bits within a single storage device (such as a NAND flash chip), erasure codes that tolerate the failure of multiple storage nodes, and replication schemes that tolerate data center or regional failures. In some embodiments, low density parity check (LDPC) code is used within a single storage unit. Reed-Solomon encoding is used within a storage cluster, and mirroring is used within a storage grid in some embodiments. Metadata may be stored using an ordered log structured index (such as a Log Structured Merge Tree), and large data may not be stored in a log structured layout.

In order to maintain consistency across multiple copies of an entity, the storage nodes agree implicitly on two things through calculations: (1) the authority that contains the entity, and (2) the storage node that contains the authority. The assignment of entities to authorities can be done by pseudorandomly assigning entities to authorities, by splitting entities into ranges based upon an externally produced key, or by placing a single entity into each authority. Examples of pseudorandom schemes are linear hashing and the Replication Under Scalable Hashing (RUSH) family of hashes, including Controlled Replication Under Scalable Hashing (CRUSH). In some embodiments, pseudo-random assignment is utilized only for assigning authorities to nodes because the set of nodes can change. The set of authorities cannot change so any subjective function may be applied in these embodiments. Some placement schemes automatically place authorities on storage nodes, while other placement schemes rely on an explicit mapping of authorities to storage nodes. In some embodiments, a pseudorandom scheme is utilized to map from each authority to a set of candidate authority owners. A pseudorandom data distribution function related to CRUSH may assign authorities to storage nodes and create a list of where the authorities are assigned. Each storage node has a copy of the pseudorandom data distribution function, and can arrive at the same calculation for distributing, and later finding or locating an authority. Each of the pseudorandom schemes requires the reachable set of storage nodes as input in some embodiments in order to conclude the same target nodes. Once an entity has been placed in an authority, the entity may be stored on physical devices so that no expected failure will lead to unexpected data loss. In some embodiments, rebalancing algorithms attempt to store the copies of all entities within an authority in the same layout and on the same set of machines.

Examples of expected failures include device failures, stolen machines, datacenter fires, and regional disasters, such as nuclear or geological events. Different failures lead to different levels of acceptable data loss. In some embodiments, a stolen storage node impacts neither the security nor the reliability of the system, while depending on system configuration, a regional event could lead to no loss of data, a few seconds or minutes of lost updates, or even complete data loss.

In the embodiments, the placement of data for storage redundancy is independent of the placement of authorities for data consistency. In some embodiments, storage nodes that contain authorities do not contain any persistent storage. Instead, the storage nodes are connected to non-volatile solid state storage units that do not contain authorities. The communications interconnect between storage nodes and non-volatile solid state storage units consists of multiple communication technologies and has non-uniform performance and fault tolerance characteristics. In some embodiments, as mentioned above, non-volatile solid state storage units are connected to storage nodes via PCI express, storage nodes are connected together within a single chassis using an Ethernet backplane, and chassis are connected together to form a storage cluster. Storage clusters are connected to clients using Ethernet or fiber channel in some embodiments. If multiple storage clusters are configured into a storage grid, the multiple storage clusters are connected using the Internet or other long-distance networking links, such as a "metro scale" link or private link that does not traverse the internet.

Authority owners have the exclusive right to modify entities, to migrate entities from one non-volatile solid state storage unit to another non-volatile solid state storage unit, and to add and remove copies of entities. This allows for maintaining the redundancy of the underlying data. When an authority owner fails, is going to be decommissioned, or is overloaded, the authority is transferred to a new storage node. Transient failures make it non-trivial to ensure that all non-faulty machines agree upon the new authority location. The ambiguity that arises due to transient failures can be achieved automatically by a consensus protocol such as Paxos, hot-warm failover schemes, via manual intervention by a remote system administrator, or by a local hardware administrator (such as by physically removing the failed machine from the cluster, or pressing a button on the failed machine). In some embodiments, a consensus protocol is used, and failover is automatic. If too many failures or replication events occur in too short a time period, the system goes into a self-preservation mode and halts replication and data movement activities until an administrator intervenes in accordance with some embodiments.

As authorities are transferred between storage nodes and authority owners update entities in their authorities, the system transfers messages between the storage nodes and non-volatile solid state storage units. With regard to persistent messages, messages that have different purposes are of different types. Depending on the type of the message, the system maintains different ordering and durability guarantees. As the persistent messages are being processed, the messages are temporarily stored in multiple durable and non-durable storage hardware technologies. In some embodiments, messages are stored in RAM, NVRAM and on NAND flash devices, and a variety of protocols are used in order to make efficient use of each storage medium. Latency-sensitive client requests may be persisted in replicated NVRAM, and then later NAND, while background rebalancing operations are persisted directly to NAND.

Persistent messages are persistently stored prior to being replicated. This allows the system to continue to serve client requests despite failures and component replacement. Although many hardware components contain unique identifiers that are visible to system administrators, manufacturer, hardware supply chain and ongoing monitoring quality control infrastructure, applications running on top of the infrastructure address virtualize addresses. These virtualized addresses do not change over the lifetime of the storage system, regardless of component failures and replacements. This allows each component of the storage system to be replaced over time without reconfiguration or disruptions of client request processing.

In some embodiments, the virtualized addresses are stored with sufficient redundancy. A continuous monitoring system correlates hardware and software status and the hardware identifiers. This allows detection and prediction of failures due to faulty components and manufacturing details. The monitoring system also enables the proactive transfer of authorities and entities away from impacted devices before failure occurs by removing the component from the critical path in some embodiments.

Referring to Figures 1-4, in addition to component redundancy in the communication channel, storage cluster 160 is configured to allow for the loss of one or more storage nodes 150. In some embodiments this cluster redundancy level may be one for relatively small storage clusters 160 (less than 8 storage nodes 150) and two for relatively larger storage clusters 160 (8 or more storage nodes 150) although any number would be suitable for the cluster redundancy level. In some embodiments, where more storage nodes 150 than the redundancy level are lost, the storage cluster 160 cannot guarantee availability of data or integrity of future updates. As mentioned above, data redundancy is implemented via segments. A segment is formed by selecting equal sized shards from a subset of the non-volatile solid state storage 152, each within a different storage node 150. Shards are reserved to establish the redundancy level, e.g., one or two, and then a remainder constitutes the data (the data shards). The shards are encoded using an ECC scheme such as parity or Reed-Soloman (RAID 6), so that any subset of the shards equal in count to the data shards may be used to reconstruct the complete data. The storage cluster redundancy represents a minimum level of redundancy and it may be exceeded for any individual data element. Segments are stored as a set of non-volatile solid state storage units, roles (data position or parity) and allocation unit local to each non-volatile solid state storage unit. The allocation units may be a physical address or an indirection determined within the non-volatile solid state storage 152. Each shard may be portioned into pages and each page into code words. In some embodiments, the pages are between about 4 kilobytes (kB) and 64 kB, e.g., 16 kB, while the code words are between about 512 bytes to 4 kB, e.g., 1 kB. These sizes are one example and not meant to be limiting as any suitable size for the code words and the pages may be utilized. The code words contain local error correction and a checksum to verify the error correction was successful. This checksum is "salted" with the logical address of the contents meaning that a failure to match the checksum may occur if the data is uncorrectable or misplaced. In some embodiments, when a code word fails a checksum it is converted to an "erasure" for purpose of the error correction algorithm so that the code word may be rebuilt.

If storage nodes 150 are added to the storage cluster 160, the target segment width (data shards and parity shards) changes. Newly allocated segments can adopt these parameters immediately. If the new cluster configuration is too narrow to allow segments to be rebuilt to the target redundancy the segment is replaced with a new segment. If storage cluster 160 has increased the target redundancy an extra redundant shard can be allocated and generated without changing the segment contents. All other segments may remain in place without modification, leaving the system with multiple concurrent segment dimensions. When the target segment is getting wider and more efficient this information can be combined with other information to determine if the segment is a better candidate than most for background processes like wear level or garbage collection. Storage nodes 150 can have differing non-volatile solid state storage 152 of differing sizes in some embodiments. If there are many units of non-volatile solid state storage 152 of each size then the normal allocation rules for segments may apply and the larger size units of non-volatile solid state storage 152 will have more overlapping segments. The storage cluster 160 may also decide to ignore the excess space or allocate segments of narrower width to make use of the extra space.

Larger storage clusters 160 may be divided into storage node groups to increase the redundancy without increasing segment width. As an example, a system of 28 storage nodes 150 may be divided into two groups of 14 each with a segment size of 10+2. When a segment is allocated the system is configured to not select shards from storage nodes in multiple groups. This arrangement ensures that up to four storage nodes may be lost, i.e., two from each group and the system operates normally. Storage node groups may be aligned with a chassis to take advantage of a higher bandwidth communications interconnect 170 for redundant operations. Storage node groups can be combined without any segment reconfiguration. If a storage node group is partitioned, any segment that crosses the two storage node is partitioned. These partitioned segments which are allocated in two storage node groups have their shards realigned within storage nodes before the storage node groups are considered independent. The system may wait for shards to be rewritten according to a normal schedule, rebuild shards into the same storage node group or move the contents into another segment.

The total set of non-volatile solid state storage units that have at least one shard allocated to a segment may be referred to as the referenced set. These non-volatile solid state storage units (via their storage nodes) are organized first into storage node groups, with a redundancy level within each storage node group. Any subset that fulfills the redundancy level in every storage node group is a quorum set, where the entire storage cluster may operate normally. The current set of non-volatile solid state storage units that are operating and may be accessed directly or indirectly via the communication buses is referred to as the reachable set. The storage cluster may be considered to be operating when the reachable set forms a valid quorum. Devices that are referenced but not reachable may be referred to as phantom devices. All data that is stored on the device may be reconstructed from other shards in the same segment. The storage cluster attempts to dereference any phantom device by persistently storing the rebuilt shards on a reachable device. Any non-volatile solid state storage unit that is not already within a storage node that contains a segment shard is a candidate for rebuilding. In some embodiments, rebuilding proceeds by ordinary data maintenance that would lead to deallocation of the overlapping segment, similar to garbage collection. Heuristics that determine the relative efficiency in terms of reading, writing or computation may be used to decide which path is appropriate. When no segments map shards onto a particular non-volatile solid state storage unit the non-volatile solid state storage unit is considered evicted and is no longer required to participate in quorum. When there are no longer any phantom non-volatile solid state storage units, the storage cluster is at full redundancy and may lose further storage nodes while remaining in quorum.

In NVRAM, redundancy is not organized by segments but instead by messages, where each message (128 bytes to 128kB) establishes its own data stripe. NVRAM is maintained at the same redundancy as segment storage and operates within the same storage node groups in some embodiments. Because messages are stored individually the stripe width is determined both by message size and the storage cluster configuration. Larger messages may be more efficiently stored as wider strips.

Fig. 5 is a multiple level block diagram, showing contents of a storage node 150 and contents of a non-volatile solid state storage 152 of the storage node 150. Data is communicated to and from the storage node 150 by a network interface controller (NIC) 202 in some embodiments. Each storage node 150 has a CPU 156, and one or more non-volatile solid state storage 152, as discussed above. Moving down one level in Fig. 5, each non-volatile solid state storage 152 has a relatively fast non-volatile solid state memory, such as nonvolatile random access memory (NVRAM) 204, and flash memory 206. In some embodiments, NVRAM 204 may be a component that does not require program/erase cycles (DRAM, MRAM, PCM), and can be a memory that can support being written vastly more often than the memory is read from. Moving down another level in Fig. 5, the NVRAM 204 is implemented in one embodiment as high speed volatile memory, such as dynamic random access memory (DRAM) 216, backed up by energy reserve 218. Energy reserve 218 provides sufficient electrical power to keep the DRAM 216 powered long enough for contents to be transferred to the flash memory 206 in the event of power failure. In some embodiments, energy reserve 218 is a capacitor, super-capacitor, battery, or other device, that supplies a suitable supply of energy sufficient to enable the transfer of the contents of DRAM 216 to a stable storage medium in the case of power loss. The flash memory 206 is implemented as multiple flash dies 222, which may be referred to as packages of flash dies 222 or an array of flash dies 222. It should be appreciated that the flash dies 222 could be packaged in any number of ways, with a single die per package, multiple dies per package (i.e. multichip packages), in hybrid packages, as bare dies on a printed circuit board or other substrate, as encapsulated dies, etc. In the embodiment shown, the non-volatile solid state storage 152 has a controller 212 or other processor, and an input output (I/O) port 210 coupled to the controller 212. I/O port 210 is coupled to the CPU 156 and/or the network interface controller 202 of the flash storage node 150. Flash input output (I/O) port 220 is coupled to the flash dies 222, and a direct memory access unit (DMA) 214 is coupled to the controller 212, the DRAM 216 and the flash dies 222. In the embodiment shown, the I/O port 210, controller 212, DMA unit 214 and flash I/O port 220 are implemented on a programmable logic device (PLD) 208, e.g., a field programmable gate array (FPGA). In this embodiment, each flash die 222 has pages, organized as sixteen kB (kilobyte) pages 224, and a register 226 through which data can be written to or read from the flash die 222. In further embodiments, other types of solid-state memory are used in place of, or in addition to flash memory illustrated within flash die 222.

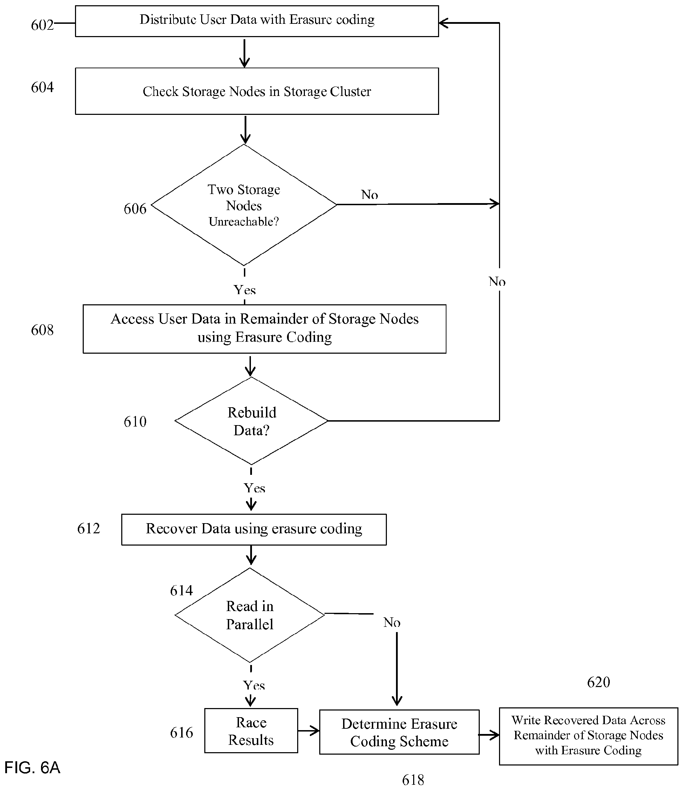

Fig. 6A is a flow diagram for a method of operating a storage cluster. The method can be practiced on or by various embodiments of a storage cluster and storage nodes as described herein. Various steps of the method can be performed by a processor, such as a processor in a storage cluster or a processor in a storage node. Portions or all of the method can be implemented in software, hardware, firmware or combinations thereof. The method initiates with action 602, where user data is distributed with erasure coding. For example, the user data could be distributed across the storage nodes of a storage cluster using one or more erasure coding schemes. Two erasure coding schemes (or more, in some embodiments) can coexist in the storage nodes in the storage cluster. In some embodiments, each storage node can determine which of a plurality of erasure coding schemes to apply when writing data, and can determine which erasure coding scheme to apply when reading data. These can be the same or differing erasure coding schemes.

The method proceeds to action 604 where the storage nodes in the storage cluster are checked. In some embodiments the storage nodes are checked for a heartbeat where each storage node periodically issues a message which acts as the heartbeat. In alternative embodiments the checking is in the form of querying a storage node, and the lack of response to the query indicates that the storage node is failing. In a decision action 606, it is determined if two storage nodes are unreachable. For example, if two of the storage nodes are no longer issuing heartbeats, or two of the storage nodes fail to respond to queries, or some combination of these or other indications, one of the other storage nodes could determine that two of the storage nodes are unreachable. If this is not the situation, flow branches back to the action 602, in order to continue distributing user data, e.g., writing user data into the storage nodes as the user data arrives for storage. If it is determined that two of the storage nodes are unreachable, flow continues to action 608.

In decision action 608, the user data is accessed in the remainder of the storage nodes, using erasure coding. It should be appreciated that user data refers to data originating from one or more users or client systems or other sources external to the storage cluster in some embodiments. In some embodiments erasure coding types include double redundancy, in which case, with two failed storage nodes, a remaining storage node has readable user data. Erasure coding types could include error correcting code allowing loss of two bits out of a code word, with data distributed across storage nodes so that the data can be recovered despite loss of two of the storage nodes. In a decision action 610, it is determined if the data is to be rebuilt. If the data should not be rebuilt, flow branches back to the action 602, in order to continue distributing user data with erasure coding. If the data should be rebuilt, flow branches to the action 612. In some embodiments, the decision to rebuild the data occurs after two storage nodes are unreachable, although the decision to rebuild the data may occur after one storage node is unreachable in other embodiments. Various mechanisms that could be taken into account in the decision to rebuild the data include error correction counts, error correction rates, failures of reads, failures of writes, loss of heartbeat, failure to reply to queries, and so on. Appropriate modification to the method of Fig. 6A is readily understood for these and further embodiments.

In the action 612, the data is recovered using erasure coding. This could be according to examples of erasure coding as discussed above, regarding the action 608. More specifically, the data is recovered from the remaining storage nodes, e.g., using error correcting code or reading from a remaining storage node, as appropriate. Data could be recovered using two or more types of erasure coding, in cases where these two or more types of erasure coding coexist in the storage nodes. In a decision action 614, it is determined if the data should be read in parallel. In some embodiments, there is more than one data path (e.g., as with double redundancy of data), and the data could be read in parallel across two paths. If the data is not to be read in parallel, flow branches to the action 618. If the data is to be read in parallel, flow branches to the action 616, in which the results are raced. The winner of the race is then used as the recovered data.

In an action 618, the erasure coding scheme for rebuilding is determined. For example, in some embodiments each storage node can decide which of two or more erasure coding schemes to apply when writing the data across the storage units. In some embodiments, the storage nodes cooperate to determine the erasure coding scheme. This can be done by determining which storage node has responsibility for the erasure coding scheme for a specific data segment, or by assigning a storage node to have this responsibility. In some embodiments, various mechanisms such as witnessing, voting, or decision logic, and so on, are employed to achieve this action. Non-volatile solid state storage may act as witnesses (in some embodiments) or voters (in some embodiments), so that if one copy of an authority becomes defective, the remaining functioning non-volatile solid state storage and the remaining copies of the authorities can determine the contents of the defective authority. In an action 620, the recovered data is written across the remainder of the storage nodes, with erasure coding. For example, the erasure coding scheme that is determined for the rebuilding could be different from the erasure coding scheme that is applied in recovering the data, i.e., in reading the data. More specifically, loss of two of the storage nodes may mean that some erasure coding schemes are no longer applicable to the remaining storage nodes, and the storage nodes then switch to an erasure coding scheme that is applicable to the remaining storage nodes.

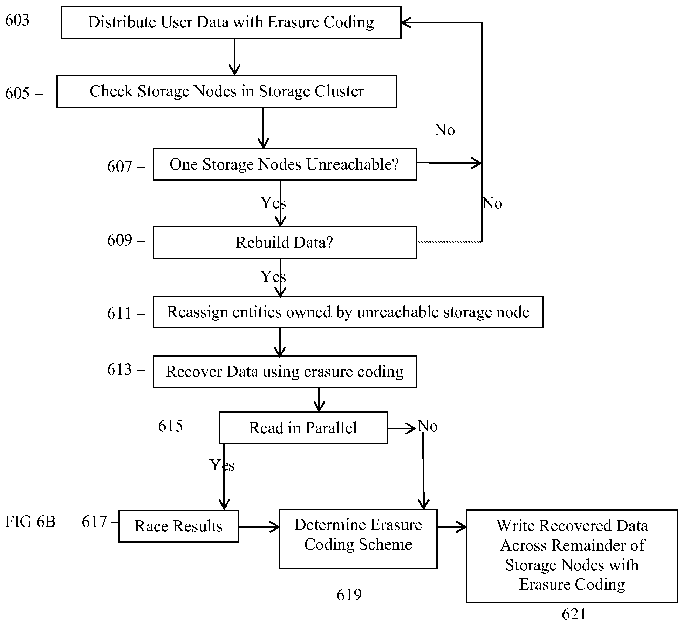

Fig. 6B is a flow diagram for a method of rebuilding data in a storage cluster. The method can be practiced on or by various embodiments of a storage cluster and storage nodes as described herein. Various steps of the method can be performed by a processor, such as a processor in a storage cluster or a processor in a storage node. Portions or all of the method can be implemented in software, hardware, firmware or combinations thereof. The method initiates with action 603, where user data is distributed with erasure coding. For example, the user data could be distributed across the storage nodes of a storage cluster using one or more erasure coding schemes. Two erasure coding schemes (or more, in some embodiments) can coexist in the storage nodes in the storage cluster. In some embodiments, each storage node can determine which of a plurality of erasure coding schemes to apply when writing data, and can determine which erasure coding scheme to apply when reading data. The erasure coding schemes can be the same or differing erasure coding schemes.

The method proceeds to action 605 where the storage nodes in the storage cluster are checked. In some embodiments the storage nodes are checked for a heartbeat where each storage node periodically issues a message which acts as the heartbeat. In alternative embodiments the checking is in the form of querying a storage node, and the lack of response to the query indicates that the storage node is failing. In a decision action 607, it is determined if a storage node is unreachable. For example, if any storage nodes are no longer issuing heartbeats, or any storage nodes fail to respond to queries, or some combination of these or other indications, one of the other storage nodes could determine that the storage node is unreachable. If this is not the situation, flow branches back to the action 603, in order to continue distributing user data, e.g., writing user data into the storage nodes as the user data arrives for storage. If it is determined that any storage node is unreachable, flow continues to action 609.

In the decision action 609, it is determined whether the data is to be rebuilt. In some embodiments, the data is rebuilt after one storage node becomes unreachable, and in some embodiments the data is rebuilt after two storage nodes become unreachable. In variations, other factors could influence the decision as to whether or not to rebuild data. For example, a critical task could be in progress, and the decision to rebuild the data could be delayed. Various mechanisms that could be taken into account in the decision to rebuild the data include error correction counts, error correction rates, failures of reads, failures of writes, loss of heartbeat, failure to reply to queries, and so on. The data may be rebuilt spontaneously, in the absence of detecting an error. For example, the lack of a heartbeat, other components of the system requesting the rebuild, and dependence on a different mode for configuration are some examples where a decision to rebuild data is executed without positive confirmation of any error. In some embodiments, the decision to rebuild the data is a client side decision in the absence of any error condition. The client side may be considered an entity requesting or which may request access to the data. Modification to the method of Fig. 6B is readily understood for these and further embodiments. If the data is not to be rebuilt, flow branches back to the action 603, in order to continue distributing user data. If the data is to be rebuilt, flow proceeds to action 611. Entities owned by the unreachable storage node are reassigned to another one of the storage nodes, in action 611. For example, the entities could be data units or metadata as discussed above and the entities could be governed by an authority of a storage node. This reassignment of entities could result in the storage nodes determining that a particular erasure coding scheme is suitable for rebuilding user data, as occurs in actions 619 and 621. The method advances to action 613 where the data is recovered using erasure coding. The storage nodes could apply the appropriate erasure coding scheme to recover the user data.

In the action 613, the data is recovered using erasure coding. The recovery could be achieved according to examples of erasure coding as discussed above. More specifically, the data is recovered from the remaining storage nodes, e.g., using error correcting code or reading from a remaining storage node, as appropriate. Data could be recovered using two or more types of erasure coding, in cases where these two or more types of erasure coding coexist in the storage nodes. In a decision action 615, it is determine if the data should be read in parallel. In some embodiments, there is more than one data path, e.g., as with double redundancy of data, and the data could be read in parallel across two paths. If the data is not to be read in parallel, flow branches to the action 619. If the data is to be read in parallel, flow branches to the action 617, in which the results are raced. The winner of the race is then used as the recovered data.

In an action 619, the erasure coding scheme for rebuilding is determined. For example, in some embodiments each storage node can decide which of two or more erasure coding schemes to apply when writing the data across the storage units. In some embodiments, the storage nodes cooperate to determine the erasure coding scheme. This cooperation may be achieved by determining which storage node has responsibility for the erasure coding scheme for a specific data segment, or by assigning a storage node to have this responsibility. In some embodiments, various mechanisms such as witnessing, voting, or decision logic, and so on, are employed to achieve this action. Non-volatile solid state storage units may act as witnesses or voters in some embodiments. Thus, if one copy of an authority becomes defective, the remaining functioning non-volatile solid state storage units and the remaining copies of the authorities can determine the contents of the defective authority. In an action 621, the recovered data is written across the remainder of the storage nodes, with erasure coding. For example, the erasure coding scheme that is determined for the rebuilding could be different from the erasure coding scheme that is applied in recovering the data, i.e., in reading the data. In some embodiments, loss of two of the storage nodes may mean that some erasure coding schemes are no longer applicable to the remaining storage nodes, and the storage nodes then switch to an erasure coding scheme that is applicable to the remaining storage nodes.

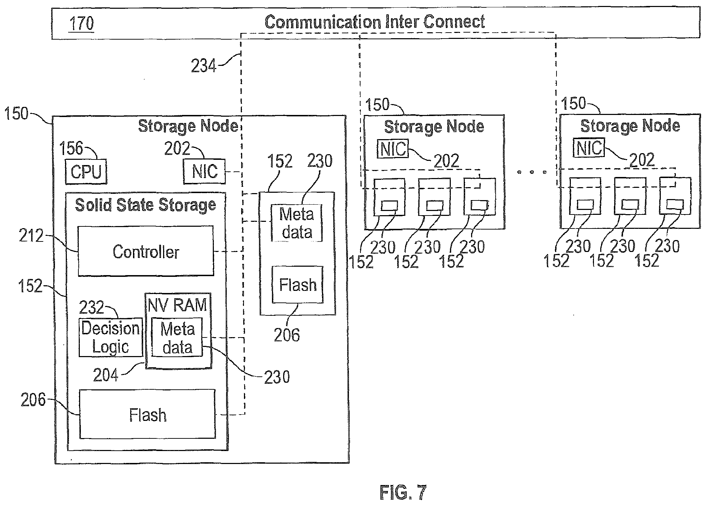

Fig. 7 is a block diagram showing a communication path or redundant copies of metadata, with further details of flash storage nodes and non-volatile solid state storage units in accordance with some embodiments. Metadata 230 includes information about the user data that is written to or read from the flash memory 206. Metadata 230 can include messages, or derivations from the messages, indicating actions to be taken or actions that have taken place involving the data that is written to or read from the flash memory 206. Distributing redundant copies of metadata 230 to the non-volatile solid-state storage units 152 through the communications interconnect 170 ensures that messages are persisted and can survive various types of failure the system may experience. Each non-volatile solid-state storage 152 dedicates a portion of the NVRAM 204 to storing metadata 230. In many embodiments, redundant copies of metadata 230 are stored in the additional non-volatile solid-state storage 152.

Flash storage nodes 150 are coupled via the communication interconnect 170 (as described above with reference to Fig. 4). More specifically, the network interface controller 202 of each storage node 150 in the storage cluster is coupled to the communication interconnect 170, providing a communication path 234 among storage nodes 150 and non-volatile solid-state storage 152. Embodiments of storage nodes 150 have one or more non-volatile solid-state storage 152, as described above. Non-volatile solid-state storage 152 internal to a storage node can communicate with each other, for example via a bus, a serial communication path, a network path or other communication path 234 as readily devised in accordance with the embodiments disclosed herein.

Referring to Figs. 5 and 7, in case of a power failure, whether local to non-volatile solid-state storage 152 or a storage node 150, data can be copied from the NVRAM 204 to the flash memory 206. For example, the DMA unit 214 (as seen in Fig. 5) can copy contents of the NVRAM 204, including the metadata, to the flash memory 206, using power supplied by the energy reserve 218. Energy reserve 218 (shown in Fig. 5) should be sized with sufficient capacity to support copy operation. That is energy reserve 218 should be sized so as to provide sufficient current at a sufficient voltage level for a time duration long enough to complete the copying. Messages that are in metadata 230 are persisted in the flash memory 206, in case of a power failure under this mechanism.

A further mechanism for persisting messages in a storage system involves the communication path 234 described above in Fig. 7. Redundant copies of the metadata 230 can be distributed via the communication path 234, in various ways. For example, a message coming from the filesystem could be distributed via the communication interconnect 170 as a broadcast over the communication path 234 to all of the non-volatile solid-state storage 152. A non-volatile solid-state storage 152 could send a copy of metadata 230 over the communication path 234 to other solid- non-volatile solid-state storage 152 in a storage node 150. A CPU 156 on a storage node 150, receiving a message from the communication interconnect 170 via the network interface controller 202 could send a copy of the message to each solid-state storage 152. The CPU 156 on a flash storage node 150, receiving a message from the communication interconnect 170 could rebroadcast the message to other flash storage nodes 150, and the flash storage nodes 150 could then distribute the message to the solid-state storages 152 in each of these flash storage nodes 150. In these and other uses of the communication path 234, redundant copies of the metadata 230 can be distributed to the non-volatile solid-state storage 152. Then, if one non-volatile solid-state storage 152, or one storage node 150 experiences a failure, redundant copies of any message of that non-volatile solid-state storage 152 or that storage node 150 are available in metadata 230 of other non-volatile solid-state storage 152. Each non-volatile solid-state storage 152 can apply decision logic 232 when evaluating various situations such as local power failure, an unreachable node, or a suggestion from a CPU 156, or from a controller 212, to consider or commence a data recovery or a data rebuild. The decision logic 232 includes witnessing logic, voting logic, consensus logic and/or other types of decision logic in various embodiments. Decision logic 232 could be implemented in hardware, software executing on the controller 212, firmware, or combinations thereof, and could be implemented as part of the controller 212 or coupled to the controller 212. The decision logic 232 is employed in consensus decisions among multiple solid-state storages 152, in some embodiments. In further embodiments, the decision logic 232 could cooperate with the other solid-state storages 152 in order to gather copies of the redundant metadata 230, and make local decisions. The mechanisms for persisting messages in a storage system are useful in the event of a failure, and can be used in data recovery and reconstruction as described above.

Flash memory can be written to once per location, until an entire block is erased, at which point flash memory can be written to again. If a failure occurs during a block erasure, or after a block erasure but prior to rewriting the flash memory, data corruption can result. Some actions span storage servers, such as writing data across a data stripe, and these messages use cluster messaging. If a failure occurs in the middle of such a data write, part of the stripe could be written and part of the stripe not written. If a failure occurs in the middle of a data read, part of the stripe could be read and part of the stripe not read. If a file is created, and the file is in a directory, there are two records, one record is a directive and the other is the directory itself. If there is a failure, and only one of these has occurred, corruption results. The directive could indicate completion so that the file is created and stored, but the directory does not show the correct location or existence of the file. In some instances the directory may show the existence of a file in a directory tree, but there is no actual file in the storage.

Examples of messages include a request to write data, a request to read data, a request to lock or unlock a file, a change in permission of a file, an update to a file allocation table or other file or directory structure, a request to write a file that has executable instructions or to write a file name that is reserved and interpreted as an executable direction, updates to one or more authorities 168, updates to a fingerprint table, list or other data used in deduplication, updates to hash tables, updates to logs, and so on. When a message is received in non-volatile solid-state storage 152 of a storage node 150, indicating some action has taken place, the message or a derivation of the message is stored as metadata 230 in the NVRAM 204 of that solid-state storage 152. By applying the redundant copies of the metadata 230, actions are captured that are in progress, so that if a failure happens, these actions can be replayed and replacement actions can then be performed, for example upon restart. Actions span storage servers and use cluster messaging, so the act of sending a message can be made persistent data via one or more of the mechanisms for persisting messages. In some embodiments, these messages don't require permanence beyond completion of the actions. In other embodiments these messages are further retained to facilitate rollback or other recovery operations.

For example, if a command is sent out to carry out a write operation, this message is recorded and redundant. If there is a failure, it can be determined whether or not that action has been carried out, and whether or not the action should be driven to completion. Such determination can be carried out using the decision logic 232 in each non-volatile solid-state storage 152. There is dedicated storage in NVRAM 204 for messages and other metadata 230, so that messages are recorded in the non-volatile solid-state storage 152 and replicated in some embodiments. The messages and other metadata 230 are written into flash memory 206 if one non-volatile solid-state storage 152 experiences a power failure, or if the entire system experiences a power failure or otherwise shuts down. The redundancy level of the messages thus matches the redundancy level of the metadata in some embodiments. When there are sufficient numbers of copies of messages, the message becomes irrevocable. If one node goes down, other nodes can vote, achieve consensus, or witness the various copies of the message and determine what action, if any, to carry to completion. If the entire system goes down, e.g., through a global power failure, then a sufficient number of these messages get written from NVRAM 204 to flash memory 206, so that upon restoration of power, the nodes can again open copies of the message and determine what action, if any, to carry to completion. It should be appreciated that the above mechanisms and actions prevent the sorts of corruptions described above.

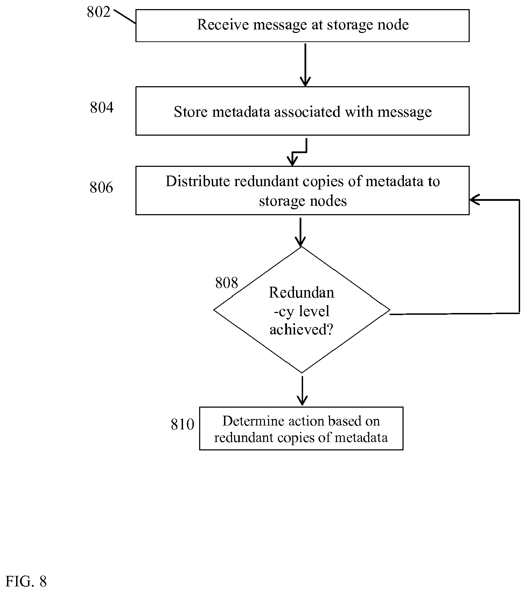

Fig. 8 is a flow diagram of a method for persisting messages in a storage system, which can be practiced on or by the storage cluster, storage nodes and/or non-volatile solid state storages in accordance with some embodiments. Many of the actions described in the method can be performed by one or more processors, such as processors on storage nodes in some embodiments. In an action 802, a message is received at a storage node. The message could be to write a data segment in a stripe across storage nodes, read a data segment in a stripe across storage nodes, etc. The message could be to update a directory, a file permission, or other aspect relating to data in the storage cluster in some embodiments. The authority associated with the message at the storage node as a source authority. In an action 804, metadata associated with the message or a derivation of the message is stored in memory, such as NVRAM. In some embodiments, after the metadata has achieved the desired redundancy level for the storage node, the message can be acted upon on the target storage node as described below in action 810. Alternatively, one or more actions such as a sequence of actions could be derived from the message, and these could be stored as metadata in the storage node. The metadata may refer to a system state that is associated with the corresponding message in some embodiments. The one or more actions or sequence of actions can also have copies redundantly distributed as described with reference to action 806. In some embodiments, when the message is created it is decided to atomically have the metadata associated with the message updated.

Continuing with Fig. 8, in an action 806, redundant copies of the metadata are distributed to other storage nodes. The distribution to other storage nodes creates a persistent message communication between authorities where each step of the communication is persistent. In addition, each time a message is updated, the metadata is atomically updated. In a decision action 808, it is determined if the redundancy level corresponding to the storage node has been achieved for the distribution of the metadata. The redundancy level may be any suitable redundancy level set for a storage node. If it is determined that the redundancy level has been met, flow branches to the action 810 where the message can be acted upon on the target storage node. If it is determined that the redundancy level has not been met, the method returns to action 806 and repeats until the redundancy level has been achieved. With regard to the mechanism for persisting messages described herein, a task is known to be completed because there is a persistent record in memory, such as NVRAM, on one or more storage nodes. The existence of any record indicates completion of the task in some embodiments. In addition, the system may restore the redundancy of that record on restart. This restoration could be accomplished using the mechanisms discussed above in some embodiments. The embodiments of Fig. 8 provide for a source authority to receive a message, record the message redundantly, and once the redundant recording (redundancy level) is achieved for the storage node, the message is delivered to a remote or destination authority and the message can be acted upon. The sending and receiving authority each have an associated NVRAM, redundancy level, and identity. The mechanism described in Fig. 8 works across time streams to ensure everything is deterministic.

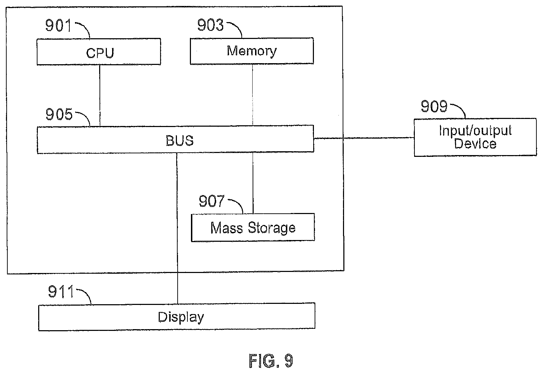

It should be appreciated that the methods described herein may be performed with a digital processing system, such as a conventional, general-purpose computer system. Special purpose computers, which are designed or programmed to perform only one function may be used in the alternative. Fig. 9 is an illustration showing an exemplary computing device which may implement the embodiments described herein. The computing device of Fig. 9 may be used to perform embodiments of the functionality for a storage node or a non-volatile solid state storage in accordance with some embodiments. The computing device includes a central processing unit (CPU) 901, which is coupled through a bus 905 to a memory 903, and mass storage device 907. Mass storage device 907 represents a persistent data storage device such as a disc drive, which may be local or remote in some embodiments. The mass storage device 907 could implement a backup storage, in some embodiments. Memory 903 may include read only memory, random access memory, etc. Applications resident on the computing device may be stored on or accessed via a computer readable medium such as memory 903 or mass storage device 907 in some embodiments. Applications may also be in the form of modulated electronic signals modulated accessed via a network modem or other network interface of the computing device. It should be appreciated that CPU 901 may be embodied in a general-purpose processor, a special purpose processor, or a specially programmed logic device in some embodiments.

Display 911 is in communication with CPU 901, memory 903, and mass storage device 907, through bus 905. Display 911 is configured to display any visualization tools or reports associated with the system described herein. Input/output device 909 is coupled to bus 905 in order to communicate information in command selections to CPU 901. It should be appreciated that data to and from external devices may be communicated through the input/output device 909. CPU 901 can be defined to execute the functionality described herein to enable the functionality described with reference to Figs. 1-8. The code embodying this functionality may be stored within memory 903 or mass storage device 907 for execution by a processor such as CPU 901 in some embodiments. The operating system on the computing device may be MS-WINDOWS™, UNIX™, LINUX™, iOS™, CentOS™, Android™, Redhat Linux™, z/OS™, or other known operating systems. It should be appreciated that the embodiments described herein may be integrated with virtualized computing system also.

Detailed illustrative embodiments are disclosed herein. However, specific functional details disclosed herein are merely representative for purposes of describing embodiments. Embodiments may, however, be embodied in many alternate forms and should not be construed as limited to only the embodiments set forth herein.

It should be understood that although the terms first, second, etc. may be used herein to describe various steps or calculations, these steps or calculations should not be limited by these terms. These terms are only used to distinguish one step or calculation from another. For example, a first calculation could be termed a second calculation, and, similarly, a second step could be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

With the above embodiments in mind, it should be understood that the embodiments might employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing. Any of the operations described herein that form part of the embodiments are useful machine operations. The embodiments also relate to a device or an apparatus for performing these operations. The apparatus can be specially constructed for the required purpose, or the apparatus can be a general-purpose computer selectively activated or configured by a computer program stored in the computer. In particular, various general-purpose machines can be used with computer programs written in accordance with the teachings herein, or it may be more convenient to construct a more specialized apparatus to perform the required operations.

A module, an application, a layer, an agent or other method-operable entity could be implemented as hardware, firmware, or a processor executing software, or combinations thereof. It should be appreciated that, where a software-based embodiment is disclosed herein, the software can be embodied in a physical machine such as a controller. For example, a controller could include a first module and a second module. A controller could be configured to perform various actions, e.g., of a method, an application, a layer or an agent.

The embodiments can also be embodied as computer readable code on a non-transitory computer readable medium. The computer readable medium is any data storage device that can store data, which can be thereafter read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer system so that the computer readable code is stored and executed in a distributed fashion. Embodiments described herein may be practiced with various computer system configurations including hand-held devices, tablets, microprocessor systems, microprocessor-based or programmable consumer electronics, minicomputers, mainframe computers and the like. The embodiments can also be practiced in distributed computing environments where tasks are performed by remote processing devices that are linked through a wire-based or wireless network.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

In various embodiments, one or more portions of the methods and mechanisms described herein may form part of a cloud-computing environment. In such embodiments, resources may be provided over the Internet as services according to one or more various models. Such models may include Infrastructure as a Service (IaaS), Platform as a Service (PaaS), and Software as a Service (SaaS). In IaaS, computer infrastructure is delivered as a service. In such a case, the computing equipment is generally owned and operated by the service provider. In the PaaS model, software tools and underlying equipment used by developers to develop software solutions may be provided as a service and hosted by the service provider. SaaS typically includes a service provider licensing software as a service on demand. The service provider may host the software, or may deploy the software to a customer for a given period of time. Numerous combinations of the above models are possible and are contemplated.

Various units, circuits, or other components may be described or claimed as "configured to" perform a task or tasks. In such contexts, the phrase "configured to" is used to connote structure by indicating that the units/circuits/components include structure (e.g., circuitry) that performs the task or tasks during operation. As such, the unit/circuit/component can be said to be configured to perform the task even when the specified unit/circuit/component is not currently operational (e.g., is not on). The units/circuits/components used with the "configured to" language include hardware--for example, circuits, memory storing program instructions executable to implement the operation, etc. Reciting that a unit/circuit/component is "configured to" perform one or more tasks is expressly intended not to invoke 35 U.S.C. 112, sixth paragraph, for that unit/circuit/component. Additionally, "configured to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks.

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope of the appended claims.

## Claims

1. A plurality of storage nodes of a storage cluster comprising:
each of the plurality of storage nodes (150) having nonvolatile solid-state memory for storage of user data and metadata; and
the plurality of storage nodes configured to initiate an action based on redundant copies of metadata distributed throughout the plurality of storage nodes, such that a source authority of one of the plurality of storage nodes receives a message, records the message redundantly throughout the plurality of storage nodes, then delivers the message to a destination authority of a further one of the storage nodes responsive to achieving a level of redundancy for the redundant copies of the metadata regarding the message, wherein the destination authority acts upon the message, and wherein each of the plurality of storage nodes is configurable to have a plurality of authorities with each authority controlling data according to a range of data identifiers for that authority.

2. A plurality of storage nodes as claimed in claim 1 further comprising:
the plurality of storage nodes communicating together as a storage cluster;
and the plurality of storage nodes configured to distribute the user data and redundant copies of a message throughout the plurality of storage nodes such that the plurality of storage nodes can read the user data, using erasure coding, despite loss of two of the plurality of storage nodes.

3. The plurality of storage nodes of any preceding claim, wherein the action includes one of a data recovery, or a data rebuild.

4. The plurality of storage nodes of claim 3, further comprising a communications interconnect (170) that couples the plurality of storage nodes.

5. The plurality of storage nodes of claim 1, in an enclosure with internal power distribution and an internal communication bus coupling the plurality of storage nodes, and wherein the enclosure couples the plurality of storage nodes to an external communication bus.

6. The plurality of storage nodes of claim 1, further comprising at least one of a), b), c) or d):
a) each of the plurality of storage nodes having a direct memory access (DMA) unit configured to copy the metadata from the RAM to the solid-state memory, responsive to a power loss;
b) each of the plurality of storage nodes configured to send a copy of the metadata to others of the plurality of storage nodes;
c) each of the plurality of storage nodes having decision logic configured to initiate the action in cooperation with others of the plurality of storage nodes;
d) each of the plurality of storage nodes having a capacitor coupled to a RAM, the capacitor having sufficient capacity to power the RAM for a predefined time period in event of a power loss.

7. A storage cluster, comprising:
a plurality of storage nodes as claimed in any of claims 1 to 6;
wherein the plurality of storage nodes configured to determine what action to carry to completion, based on the redundant copies of the metadata, responsive to achieving a level of redundancy for the redundant copies of the metadata, and
the plurality of storage nodes having at least one authority, each authority configured to determine which type of erasure coding scheme is applied to a portion of user data owned by the authority.

8. The storage cluster of claim 7, wherein the solid-state memory includes flash, and wherein the action includes one of reading the user data, writing the user data, updating a property of the user data, recovering the user data, or rebuilding the user data.

9. The storage cluster of claim 7, further comprising at least one of a), b) or c):
a) each of the plurality of storage nodes having a nonvolatile random access memory (NVRAM), configured to store the metadata;
b) each of the plurality of storage nodes having decision logic for determining what action to carry to completion, the decision logic including one of witnessing logic, voting logic, or consensus logic;
c) each of the plurality of storage nodes configured such that the redundant copies of metadata are communicated via one of an interconnect switch configured to broadcast a message to each of the plurality of storage nodes, one of the plurality of storage nodes sending a copy of the metadata to others of the plurality of storage nodes, or one of the plurality of storage nodes sending a copy of a message to others of the plurality of storage nodes.

10. A method for persisting messages in a plurality of storage nodes having nonvolatile solid-state memory, comprising:
receiving a message at a source authority of one of the plurality of storage nodes, wherein each of the plurality of storage nodes is configurable to have a plurality of authorities with each authority controlling data according to a range of data identifiers for that authority;
distributing redundant copies of metadata relating to the message from the source authority to others of the plurality of storage nodes;
determining whether a level of redundancy for distributed redundant copies of the metadata regarding the message has been achieved; and
determining an action, including the source authority delivering the message to a destination authority of a further one of the plurality of storage nodes, based on the redundant copies of the metadata responsive to achieving the level of redundancy, wherein a processor performs at least one method operation.

11. The method of claim 10, further comprising:
distributing user data throughout the plurality of storage nodes through erasure coding, wherein the plurality of storage nodes are coupled as a storage cluster, and wherein the user data is accessible, via the erasure coding, in the plurality of storage nodes in event of two of the plurality of storage nodes being unreachable, and
storing metadata relating to the message in one of the plurality of storage nodes.

12. The method of claim 10, further comprising:
broadcasting the metadata to the one of the plurality of storage nodes and to the others of the plurality of storage nodes.

13. The method of claim 10, wherein each of the plurality of storage nodes has flash memory as the solid-state memory, and wherein user data is distributed via a communications interconnect (170).

14. The method of claim 10, further comprising at least one of a), b) or c):
a) copying the metadata from random access memory to a flash memory of the one of the plurality of storage nodes, in response to a power loss, wherein the flash memory is included in the solid-state memory;
b) delivering the message to one of the others of the plurality of storage nodes after determining the level of redundancy has been achieved;
c) detecting a power loss; and supplying electrical power from an energy reserve sufficient to sustain the metadata during a direct memory access (DMA) to copy the metadata.

15. The method of claim 10, wherein the metadata includes one of a request to lock a file, a request to unlock a file, a change in a permission of a file, an update to a directory structure, a request to write a file that has executable instructions, a request to write a file name that is reserved, an update to a fingerprint data, an update to a hash table, or an update to a log, and wherein the action is based on the metadata.

## Patentansprüche

1. Vielzahl von Speicherknoten eines Speicherclusters, Folgendes umfassend:
jeder der Vielzahl von Speicherknoten (150) weist einen nichtflüchtigen Festkörperspeicher zum Speichern von Benutzerdaten und Metadaten auf; und
die Vielzahl von Speicherknoten ist dazu konfiguriert, eine Handlung auf Grundlage von redundanten Kopien von Metadaten, die durch die Vielzahl von Speicherknoten hinweg verteilt sind, derart zu initiieren, dass eine Quellautorität eines der Vielzahl von Speicherknoten eine Nachricht empfängt, die Nachricht redundant durch die Vielzahl von Speicherknoten hinweg speichert und dann die Nachricht an eine Zielautorität eines weiteren der Speicherknoten als Reaktion darauf liefert, dass ein Redundanzlevel für die redundanten Kopien der Metadaten, die die Nachricht betreffen, erreicht ist, wobei die Zielautorität aufgrund der Nachricht handelt, und wobei jeder der Vielzahl von Speicherknoten dazu konfiguriert werden kann, eine Vielzahl von Autoritäten aufzuweisen, wobei jede Autorität Daten entsprechend einem Bereich von Datenkennungen für diese Autorität steuert.

2. Vielzahl von Speicherknoten nach Anspruch 1, ferner Folgendes umfassend:
die Vielzahl von Speicherknoten kommunizieren zusammen als ein Speichercluster;
und die Vielzahl von Speicherknoten ist dazu konfiguriert, die Benutzerdaten und redundante Kopien einer Nachricht durch die Vielzahl von Speicherknoten derart hinweg zu verteilen, dass die Vielzahl von Speicherknoten die Benutzerdaten unter Verwendung von Löschcodieren und trotz eines Verlusts von zwei der Vielzahl von Speicherknoten lesen kann.

3. Vielzahl von Speicherknoten nach einem der vorstehenden Ansprüche, wobei die Handlung eine von einer Datenrückgewinnung oder einer Datenrekonstruktion beinhaltet.

4. Vielzahl von Speicherknoten nach Anspruch 3, ferner eine Kommunikationszwischenverbindung (170) umfassend, die die Vielzahl von Speicherknoten koppelt.

5. Vielzahl von Speicherknoten nach Anspruch 1 in einem Gehäuse mit interner Leistungsverteilung und einem internen Kommunikationsbus, der die Vielzahl von Speicherknoten koppelt, und wobei das Gehäuse die Vielzahl von Speicherknoten mit einem externen Kommunikationsbus koppelt.

6. Vielzahl von Speicherknoten nach Anspruch 1, ferner mindestens eines von a), b), c) oder d) umfassend:
a) jeder der Vielzahl von Speicherknoten weist eine Einheit mit direktem Speicherzugriff (DMA) auf, die dazu konfiguriert ist, die Metadaten von dem RAM zu dem Festkörperspeicher als Reaktion auf einen Leistungsverlust zu kopieren;
b) jeder der Vielzahl von Speicherknoten ist dazu konfiguriert, eine Kopie der Metadaten an andere der Vielzahl von Speicherknoten zu senden;
c) jeder der Vielzahl von Speicherknoten weist eine Entscheidungslogik auf, die dazu konfiguriert ist, die Handlung in Kooperation mit anderen der Vielzahl von Speicherknoten zu initiieren;
d) jeder der Vielzahl von Speicherknoten weist einen mit einem RAM gekoppelten Kondensator auf, wobei der Kondensator ausreichend Kapazität aufweist, um den RAM, im Fall eines Leistungsverlusts, für einen vorbestimmten Zeitraum mit Leistung zu versorgen.

7. Speichercluster, Folgendes umfassend:
eine Vielzahl von Speicherknoten nach einem der Ansprüche 1 bis 6;
wobei die Vielzahl von Speicherknoten dazu konfiguriert ist, als Reaktion darauf, dass ein Redundanzlevel für die redundanten Kopien der Metadaten erreicht ist, zu bestimmen, welche Handlung auf Grundlage der redundanten Kopien der Metadaten vollzogen werden soll, und
die Vielzahl von Speicherknoten mindestens eine Autorität aufweist, wobei jede Autorität dazu konfiguriert ist, zu bestimmen, welche Art von Löschcodierungsschema an einem Abschnitt von Benutzerdaten angewandt wird, die der Autorität gehören.

8. Speichercluster nach Anspruch 7, wobei der Festkörperspeicher Flash beinhaltet, und wobei die Handlung eines von Lesen der Benutzerdaten, Schreiben der Benutzerdaten, Aktualisieren einer Eigenschaft der Benutzerdaten, Rückgewinnen der Benutzerdaten oder Rekonstruieren der Benutzerdaten beinhaltet.

9. Speichercluster nach Anspruch 7, ferner mindestens eines von a), b) oder c) umfassend:
a) jeder der Vielzahl von Speicherknoten weist einen nichtflüchtigen Direktzugriffspeicher (NVRAM) auf, der dazu konfiguriert ist, die Metadaten zu speichern;
b) jeder der Vielzahl von Speicherknoten weist eine Entscheidungslogik zum Bestimmen auf, welche Handlung vollzogen werden soll, wobei die Entscheidungslogik eine von einer Beobachtungslogik, einer Wähllogik oder einer Konsenslogik beinhaltet;
c) jeder der Vielzahl von Speicherknoten ist derart konfiguriert, dass die redundanten Kopien von Metadaten über einen von einem Zwischenverbindungsschalter kommuniziert werden, der dazu konfiguriert ist, eine Nachricht an jeden der Vielzahl von Speicherknoten zu übertragen, wobei einer der Vielzahl von Speicherknoten eine Kopie der Metadaten an andere der Vielzahl von Speicherknoten sendet oder einer der Vielzahl von Speicherknoten eine Kopie einer Nachricht an andere der Vielzahl von Speicherknoten sendet.

10. Verfahren zum Persistieren von Nachrichten in einer Vielzahl von Speicherknoten mit nichtflüchtigem Festkörperspeicher, Folgendes umfassend:
Empfangen einer Nachricht bei einer Quellautorität eines der Vielzahl von Speicherknoten, wobei jeder der Vielzahl von Speicherknoten dazu konfiguriert werden kann, eine Vielzahl von Autoritäten aufzuweisen, wobei jede Autorität Daten entsprechend einem Bereich von Datenkennungen für diese Autorität steuert;
Verteilen von redundanten Kopien von Metadaten, die sich auf die Nachricht von der Quellautorität beziehen, an andere der Vielzahl von Speicherknoten;
Bestimmen, ob ein Redundanzlevel für verteilte redundante Kopien der Metadaten, die sich auf die Nachricht beziehen, erreicht wurde; und
Bestimmen einer Handlung, die das Liefern der Nachricht von der Quellautorität an eine Zielautorität einer weiteren der Vielzahl von Speicherknoten auf Grundlage der redundanten Kopien der Metadaten als Reaktion darauf, dass das Redundanzlevel erreicht wurde, beinhaltet, wobei ein Prozessor mindestens eine Verfahrensoperation durchführt.

11. Verfahren nach Anspruch 10, ferner Folgendes umfassend:
Verteilen von Benutzerdaten durch Löschcodieren durch die Vielzahl von Speicherknoten hinweg, wobei die Vielzahl von Speicherknoten als ein Speichercluster gekoppelt ist, und wobei die Benutzerdaten in der Vielzahl von Speicherknoten für den Fall, dass zwei der Vielzahl von Speicherknoten nicht erreichbar sind, über das Löschcodieren zugänglich sind, und
Speichern von Metadaten, die sich auf die Nachricht beziehen, in einem der Vielzahl von Speicherknoten.

12. Verfahren nach Anspruch 10, ferner Folgendes umfassend:
Übertragen der Metadaten an den einen der Vielzahl von Speicherknoten und an die anderen der Vielzahl von Speicherknoten.

13. Verfahren nach Anspruch 10, wobei jeder der Vielzahl von Speicherknoten einen Flashspeicher als Festkörperspeicher aufweist, und wobei Benutzerdaten über eine Kommunikationszwischenverbindung (170) verteilt werden.

14. Verfahren nach Anspruch 10, ferner mindestens eines von a), b) oder c) umfassend:
a) Kopieren der Metadaten von einem Direktzugriffspeicher zu einem Flashspeicher des einen der Vielzahl von Speicherknoten als Reaktion auf einen Leistungsverlust, wobei der Flashspeicher in dem Festkörperspeicher enthalten ist;
b) Liefern der Nachricht an einen der anderen der Vielzahl von Speicherknoten nach dem Bestimmen, dass das Redundanzlevel erreicht wurde;
c) Erkennen eines Leistungsverlustes; und Zuführen von elektrischer Leistung von einer Energiereserve, die ausreichend ist, um die Metadaten während eines Direktspeicherzugriffs (DMA) aufrechtzuerhalten, um die Metadaten zu kopieren.

15. Verfahren nach Anspruch 10, wobei die Metadaten eines von einer Anfrage, eine Datei zu sperren, einer Anfrage, eine Datei zu entsperren, einer Änderung in einer Berechtigung einer Datei, einer Aktualisierung für eine Verzeichnisstruktur, einer Anfrage, eine Datei mit ausführbaren Anweisungen zu schreiben, einer Anfrage, einen reservierten Dateinamen zu schreiben, einer Aktualisierung für Fingerabdruckdaten, einer Aktualisierung für eine Hashtabelle oder einer Aktualisierung für ein Log beinhalten, und wobei die Handlung auf den Metadaten basiert.

## Revendications

1. Pluralité de noeuds de stockage d'une grappe de stockage comprenant :
chacun de la pluralité de noeuds de stockage (150) ayant une mémoire semi-conductrice non volatile pour stocker des données d'utilisateur et des métadonnées ; et
la pluralité de noeuds de stockage configurés pour lancer une action sur la base de copies redondantes de métadonnées distribuées parmi la pluralité de noeuds de stockage, de sorte qu'une autorité de source d'un de la pluralité de noeuds de stockage reçoit un message, enregistre le message de manière redondante parmi la pluralité de noeuds de stockage, délivre ensuite le message à une autorité de destination d'un autre des noeuds de stockage en réponse à la réalisation d'un niveau de redondance pour les copies redondantes des métadonnées concernant le message, dans laquelle l'autorité de destination agit sur le message, et dans laquelle chacun de la pluralité de noeuds de stockage est configurable pour avoir une pluralité d'autorités avec chaque autorité commandant des données selon une série d'identifiants de données pour cette autorité.

2. Pluralité de noeuds de stockage selon la revendication 1, comprenant en outre :
la pluralité de noeuds de stockage communiquant ensemble en tant que grappe de stockage ;
et la pluralité de noeuds de stockage configurés pour distribuer les données d'utilisateur et les copies redondantes d'un message parmi la pluralité de noeuds de stockage de sorte que la pluralité de noeuds de stockage peuvent lire les données d'utilisateur, à l'aide d'un codage d'effacement, en dépit d'une perte de deux noeuds de la pluralité de noeuds de stockage.

3. Pluralité de noeuds de stockage selon l'une quelconque des revendications précédentes, dans laquelle l'action inclut une d'une récupération de données ou d'une reconstruction de données.

4. Pluralité de noeuds de stockage selon la revendication 3, comprenant en outre un dispositif d'interconnexions de communications (170) qui couple la pluralité de noeuds de stockage.

5. Pluralité de noeuds de stockage selon la revendication 1, dans une enceinte avec une distribution d'énergie interne et un bus de communication interne couplant la pluralité de noeuds de stockage, et dans laquelle l'enceinte couple la pluralité de noeuds de stockage à un bus de communication externe.

6. Pluralité de noeuds de stockage selon la revendication 1, comprenant en outre au moins un de a), b), c) ou d) :
a) chacun de la pluralité de noeuds de stockage ayant une unité d'accès direct à la mémoire (DMA) configurée pour copier les métadonnées de la RAM vers la mémoire semi-conductrice, en réponse à une perte d'alimentation ;
b) chacun de la pluralité de noeuds de stockage configuré pour envoyer une copie des métadonnées à d'autres noeuds de la pluralité de noeuds de stockage ;
c) chacun de la pluralité de noeuds de stockage ayant une logique de décision configurée pour lancer l'action en coopération avec d'autres noeuds de la pluralité de noeuds de stockage ;
d) chacun de la pluralité de noeuds de stockage ayant un condensateur couplé à une RAM, le condensateur ayant une capacité suffisante pour alimenter la RAM pendant une période de temps prédéfinie en cas de perte d'alimentation.

7. Grappe de stockage, comprenant :
une pluralité de noeuds de stockage selon l'une quelconque des revendications 1 à 6 ;
dans laquelle la pluralité de noeuds de stockage configurés pour déterminer quelle action doit être menée à terme, sur la base des copies redondantes des métadonnées, en réponse à la réalisation d'un niveau de redondance pour les copies redondantes des métadonnées, et
la pluralité de noeuds de stockage ayant au moins une autorité, chaque autorité configurée pour déterminer quel type de schéma de codage d'effacement est appliqué à une partie de données d'utilisateur possédées par l'autorité.

8. Grappe de stockage selon la revendication 7, dans laquelle la mémoire semi-conductrice inclut une mémoire flash, et dans laquelle l'action inclut une d'une lecture des données d'utilisateur, d'une écriture des données d'utilisateur, d'une mise à jour d'une propriété des données d'utilisateur, d'une récupération des données d'utilisateur, ou d'une reconstruction des données d'utilisateur.

9. Grappe de stockage selon la revendication 7, comprenant en outre au moins un de a), b) ou c) :
a) chacun de la pluralité de noeuds de stockage ayant une mémoire vive non volatile (NVRAM) configurée pour stocker les métadonnées ;
b) chacun de la pluralité de noeuds de stockage ayant une logique de décision pour déterminer quelle action doit être menée à terme, la logique de décision incluant une logique de témoignage, une logique de vote ou une logique de consensus ;
c) chacun de la pluralité de noeuds de stockage configuré de sorte que les copies redondantes de métadonnées sont communiquées via un d'un commutateur de dispositif d'interconnexion configuré pour diffuser un message à chacun de la pluralité de noeuds de stockage, un de la pluralité de noeuds de stockage envoyant une copie des métadonnées à d'autres noeuds de la pluralité de noeuds de stockage, ou un de la pluralité de noeuds de stockage envoyant une copie d'un message à d'autres noeuds de la pluralité de noeuds de stockage.

10. Procédé de persistance de messages dans une pluralité de noeuds de stockage ayant une mémoire semi-conductrice non volatile, comprenant :
la réception d'un message au niveau d'une autorité de source d'un de la pluralité de noeuds de stockage, dans lequel chacun de la pluralité de noeuds de stockage est configurable pour avoir une pluralité d'autorités avec chaque autorité commandant des données selon une série d'identifiants de données pour cette autorité ;
la distribution de copies redondantes de métadonnées relatives au message de l'autorité de source à d'autres noeuds de la pluralité de noeuds de stockage ;
le fait de déterminer si un niveau de redondance pour des copies redondantes distribuées des métadonnées concernant le message a été réalisé ; et
la détermination d'une action, incluant l'autorité de source délivrant le message à une autorité de destination d'un autre noeud de la pluralité de noeuds de stockage, sur la base des copies redondantes des métadonnées en réponse à la réalisation du niveau de redondance, dans lequel un processeur effectue au moins une opération de procédé.

11. Procédé selon la revendication 10, comprenant en outre :
la distribution de données d'utilisateur parmi la pluralité de noeuds de stockage par un codage d'effacement, dans lequel la pluralité de noeuds de stockage sont couplés en tant que grappe de stockage, et dans lequel les données d'utilisateur sont accessibles, via le codage d'effacement, dans la pluralité de noeuds de stockage dans le cas où deux noeuds de la pluralité de noeuds de stockage ne peuvent pas être joints, et
le stockage de métadonnées relatives au message dans un de la pluralité de noeuds de stockage.

12. Procédé selon la revendication 10, comprenant en outre :
la diffusion des métadonnées à un de la pluralité de noeuds de stockage et aux autres noeuds de la pluralité de noeuds de stockage.

13. Procédé selon la revendication 10, dans lequel chacun de la pluralité de noeuds de stockage a une mémoire flash en tant que mémoire semi-conductrice, et dans lequel des données d'utilisateur sont distribuées via un dispositif d'interconnexions de communications (170).

14. Procédé selon la revendication 10, comprenant en outre au moins d'un de a), b) ou c) :
a) la copie des métadonnées d'une mémoire vive vers une mémoire flash de l'un de la pluralité de noeuds de stockage, en réponse à une perte d'alimentation, dans lequel la mémoire flash est incluse dans la mémoire semi-conductrice ;
b) la délivrance du message à un des autres noeuds de la pluralité de noeuds de stockage après le fait de déterminer que le niveau de redondance a été réalisé ;
c) la détection d'une perte d'alimentation ; et la fourniture d'alimentation électrique depuis une réserve d'énergie suffisante pour soutenir les métadonnées durant un accès direct à la mémoire (DMA) pour copier les métadonnées.

15. Procédé selon la revendication 10, dans lequel les métadonnées incluent un d'une demande de verrouiller un fichier, d'une demande de déverrouiller un fichier, d'un changement de permission d'un fichier, d'une mise à jour vers une structure de répertoires, d'une demande d'écriture d'un fichier qui a des instructions exécutables, d'une demande d'écriture d'un nom de fichier qui est réservé, d'une mise à jour de données d'une empreinte digitale, d'une mise à jour d'une table de hachage, ou d'une mise à jour vers un journal, et dans lequel l'action est basée sur les métadonnées.
